# EUROPEAN PATENT APPLICATION

(11) **EP 3 769 888 A1**
(43) Date of publication of application: **27.01.2021**
(21) Application number: 18910421.9
(22) Date of filing: 22.03.2018
(51) Int. Cl.: B23C 5/28, B24D 7/10

(54) **END MILL**

(71) Applicant: Sumitomo Electric Hardmetal Corp., Itami-shi, Hyogo 664-0016 (JP)
(72) Inventor: KOBAYASHI, Yutaka, Itami-shi, Hyogo 664-0016 (JP); KUKINO, Satoru, Itami-shi, Hyogo 664-0016 (JP)
(74) Representative: Boult Wade Tennant LLP
(86) International application number: PCT/JP2018/011399
(87) International publication number: WO 2019/180873

(57) **Abstract**

An end mill has a shank and a cutting edge portion. The shank has a coolant supply path. The cutting edge portion covers an outlet of the coolant supply path and is provided on the shank. The cutting edge portion is made of a porous body.

## Description

### TECHNICAL FIELD

The present disclosure relates to an end mill.

### BACKGROUND ART

Japanese Patent Laying-Open No. 2016-112678 (PTL 1) describes a ball end mill having a diamond sintered body. A cutting edge portion of the ball end mill has a hemispherical surface. The surface of the hemispherical surface is formed by polishing protrusions of the diamond sintered body made of diamond particles and a binder.

### CITATION LIST

### PATENT LITERATURE

PTL 1: Japanese Patent Laying-Open No. 2016-112678

### SUMMARY OF INVENTION

An end mill in accordance with the present disclosure includes a shank and a cutting edge portion. The shank has a coolant supply path. The cutting edge portion covers an outlet of the coolant supply path and is provided on the shank. The cutting edge portion is made of a porous body.

### BRIEF DESCRIPTION OF DRAWINGS

Fig. 1 is a schematic perspective view of an end mill in accordance with a first embodiment.
Fig. 2 is an enlarged schematic perspective view in the vicinity of a cutting edge portion of the end mill in accordance with the first embodiment.
Fig. 3 is a schematic front view of the end mill in accordance with the first embodiment.
Fig. 4 is a schematic end view taken along a line IV-IV in Fig. 3.
Fig. 5 is a schematic front view of an end mill in accordance with a second embodiment.
Fig. 6 is a schematic side view of the end mill in accordance with the second embodiment.
Fig. 7 is a schematic side view of an end mill in accordance with a third embodiment.
Fig. 8 is a schematic front view of an end mill in accordance with a fourth embodiment.
Fig. 9 is a schematic side view of an end mill in accordance with a fifth embodiment.
Fig. 10 is a schematic side view of an end mill in accordance with a sixth embodiment.
Fig. 11 is a schematic side view of an end mill in accordance with a seventh embodiment.
Fig. 12 is a schematic side view of an end mill in accordance with an eighth embodiment.
Fig. 13 is a flowchart schematically showing a method for manufacturing a cutting portion in accordance with the present embodiment.
Fig. 14 is a schematic perspective view showing a configuration of a sintered body.
Fig. 15 is a schematic perspective view showing a configuration of a pellet.
Fig. 16 is a schematic cross sectional view showing a configuration of the pellet before an acid treatment step.
Fig. 17 is a schematic cross sectional view showing a configuration of the pellet after the acid treatment step.
Fig. 18 is a schematic perspective view showing a configuration of the pellet after being shaped.
Fig. 19 is a schematic view showing a configuration of a measurement device for porosity.

### DETAILED DESCRIPTION

### [Problem to be Solved by the Present Disclosure]

In the end mill described in Japanese Patent Laying-Open No. 2016-112678 (PTL 1), cutting edges are constituted of protrusions of the diamond particles and recesses of cobalt as the binder. Accordingly, in the end mill, chips are likely to gradually clog the recesses as cutting proceeds. In addition, when a hard and brittle material is machined at high rotation, the cutting edge portion is likely to be worn by friction heat.

One aspect of the present invention has been made to solve the aforementioned problem, and an object thereof is to provide an end mill capable of suppressing wear of a cutting edge portion while suppressing chips from clogging the cutting edge portion.

### [Advantageous Effect of the Present Disclosure]

According to one aspect of the present invention, an end mill capable of suppressing wear of a cutting edge portion while suppressing chips from clogging the cutting edge portion can be provided.

### [Summary of Embodiments of the Present Invention]

First, a summary of embodiments of the present invention will be described.
(1) An end mill 1 in accordance with the present disclosure includes a shank 10 and a cutting edge portion 20. Shank 10 has a coolant supply path 13. Cutting edge portion 20 covers an outlet 12d of coolant supply path 13 and is provided on shank 10. Cutting edge portion 20 is made of a porous body. A coolant introduced from coolant supply path 13 appears on the surface of cutting edge portion 20 through the inside of cutting edge portion 20. Accordingly, chips clogging cutting edge portion 20 are pushed to the outside by the coolant. In addition, the coolant is discharged to the outside from the surface of cutting edge portion 20. Accordingly, cutting edge portion 20 can be effectively cooled. As a result, it is possible to suppress wear of cutting edge portion 20 while suppressing chips from clogging cutting edge portion 20.
(2) In end mill 1 in accordance with (1) described above, cutting edge portion 20 may include a trailing end surface 22 on a side of shank 10, a leading end surface 21 opposite to trailing end surface 22, and a coolant flow path 24 penetrating trailing end surface 22 and leading end surface 21. An opening of coolant flow path 24 in leading end surface 21 may constitute a cutting edge 23. Thereby, it is possible to effectively cool cutting edge 23 while suppressing chips from clogging cutting edge 23 formed in leading end surface 21.
(3) In end mill 1 in accordance with (2) described above, leading end surface 21 may have a chip discharge groove 25 extending toward shank 10. Thereby, chips can be effectively discharged to the outside.
(4) In end mill 1 in accordance with (3) described above, chip discharge groove 25 may be separated from trailing end surface 22.
(5) In end mill 1 in accordance with (3) described above, chip discharge groove 25 may be continuous to trailing end surface 22.
(6) In end mill 1 in accordance with (3) described above, shank 10 may have an outer circumferential groove 14 extending along a direction in which chip discharge groove 25 extends. Thereby, chips can be further effectively discharged to the outside.
(7) In end mill 1 in accordance with (3) to (6) described above, when viewed from a direction parallel to a rotation axis A, chip discharge groove 25 may have a linear shape.
(8) In end mill 1 in accordance with (3) to (6) described above, when viewed from a direction parallel to rotation axis A, chip discharge groove 25 may have an arc shape.
(9) In end mill 1 in accordance with (1) to (8) described above, cutting edge portion 20 may be made of polycrystalline diamond. When a workpiece is made of an iron-based material, cutting edge 23 may be significantly worn, because diamond and iron have high reactivity. Accordingly, the effect of suppressing wear is enhanced in particular in end mill 1 having cutting edge portion 20 made of diamond and used for a workpiece made of an iron-based material.
(10) In end mill 1 in accordance with (9) described above, the polycrystalline diamond may have an average particle diameter of 0.5 µm or more and 100 µm or less.
(11) In end mill 1 in accordance with (1) to (10) described above, the porous body may have a porosity of 2% by volume or more and 10% by volume or less. By setting the porosity of the porous body to 2% by volume or more, a large amount of coolant can be discharged from the surface of cutting edge portion 20. On the other hand, by setting the porosity of the porous body to 20% by volume or less, an excessive reduction in the strength of cutting edge portion 20 can be suppressed.

### [Details of Embodiments of the Present Disclosure]

Hereinafter, embodiments of the present disclosure will be described based on the drawings. It should be noted that identical or corresponding parts in the drawings below will be designated by the same reference numerals, and the description thereof will not be repeated.

### (First Embodiment)

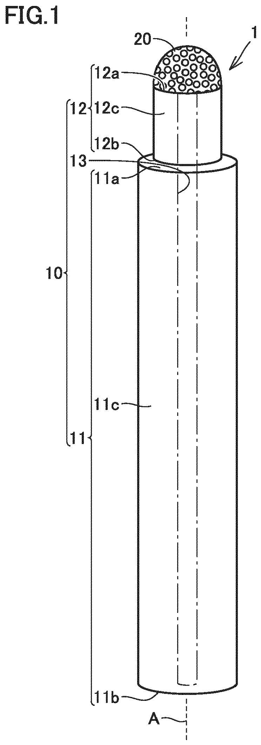

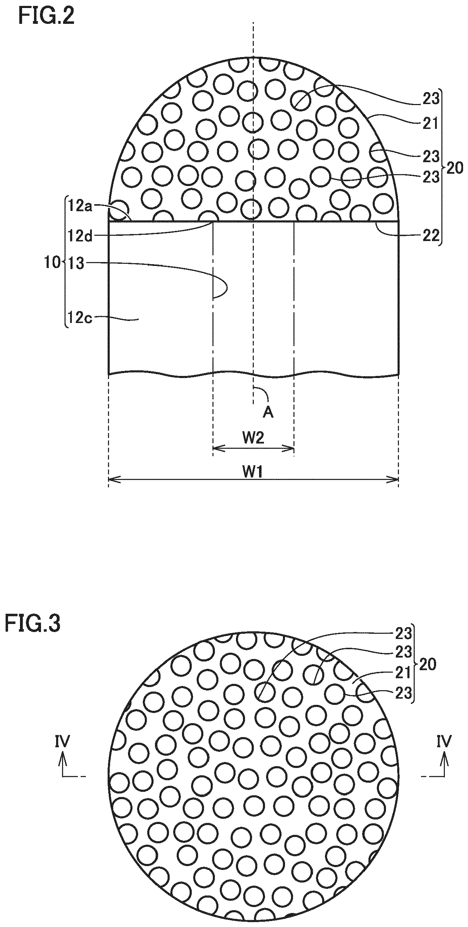

First, a configuration of end mill 1 in accordance with a first embodiment will be described. Fig. 1 is a schematic perspective view of end mill 1 in accordance with the first embodiment. Fig. 2 is an enlarged schematic perspective view in the vicinity of cutting edge portion 20 of end mill 1 in accordance with the first embodiment. Fig. 3 is a schematic front view of end mill 1 in accordance with the first embodiment.

End mill 1 in accordance with the first embodiment is a rotary cutting tool used to machine a hard and brittle material such as a cemented carbide, a hardened steel, or the like, for example. As shown in Fig. 1, end mill 1 in accordance with the first embodiment is constituted to be rotatable about rotation axis A, and mainly has shank 10 and cutting edge portion 20. Cutting edge portion 20 is provided on shank 10. Cutting edge portion 20 has a diameter of 6 mm or less, for example. Shank 10 is constituted of a first shank portion 11 and a second shank portion 12, for example. Second shank portion 12 is provided on first shank portion 11. Each of first shank portion 11 and second shank portion 12 is cylindrical. The diameter of first shank portion 11 is larger than the diameter of second shank portion 12.

First shank portion 11 has a first main surface 11a, a second main surface 11b, and a first outer circumferential portion 11c. Second main surface 11b is a surface opposite to first main surface 11a. First outer circumferential portion 11c is provided around rotation axis A. Second shank portion 12 has a third main surface 12a, a fourth main surface 12b, and a second outer circumferential portion 12c. Fourth main surface 12b is a surface opposite to third main surface 12a. First main surface 11a of first shank portion 11 is in contact with fourth main surface 12b of a second member. Shank 10 has coolant supply path 13. Coolant supply path 13 extends from second main surface 11b to third main surface 12a.

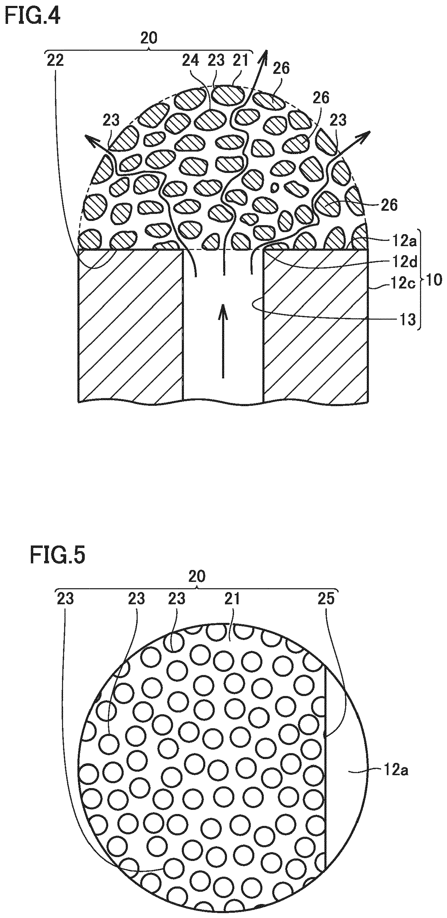

As shown in Fig. 2, cutting edge portion 20 mainly has leading end surface 21 and trailing end surface 22. Trailing end surface 22 is a surface on a side of shank 10. Trailing end surface 22 faces shank 10. Trailing end surface 22 is joined to shank 10 by brazing, for example. Leading end surface 21 is a surface opposite to trailing end surface 22. Trailing end surface 22 of cutting edge portion 20 is provided on third main surface 12a of shank 10. Trailing end surface 22 of cutting edge portion 20 Cutting edge portion 20 covers outlet 12d of coolant supply path 13. Cutting edge portion 20 is made of a porous body. Cutting edge portion 20 has a substantially hemispherical shape. Leading end surface 21 has a substantially hemispherical surface shape. Trailing end surface 22 has a substantially circular shape. Cutting edge portion 20 has coolant flow path 24 (see Fig. 4). As shown in Fig. 3, a plurality of openings of coolant flow path 24 are provided in leading end surface 21. Each opening of coolant flow path 24 in leading end surface 21 constitutes cutting edge 23. From another viewpoint, the circumference of each outlet of coolant flow path 24 serves as cutting edge 23.

Fig. 4 is a schematic end view taken along a line IV-IV in Fig. 3. As shown in Fig. 4, coolant flow path 24 penetrates trailing end surface 22 and leading end surface 21. From another viewpoint, coolant flow path 24 is opened in each of leading end surface 21 and trailing end surface 22. Openings of coolant flow path 24 in trailing end surface 22 serve as inlets of coolant flow path 24. The openings of coolant flow path 24 in leading end surface 21 serve as outlets of coolant flow path 24. Cutting edge portion 20 is formed by sintering polycrystalline diamond using cobalt as a binder, and then causing the cobalt as the binder to reach out, for example. The portion where the cobalt caused to reach out has existed becomes a cavity, and the cavity serves as coolant flow path 24. Coolant flow path 24 is a space formed between a plurality of diamond particles 26. From another viewpoint, an inner wall of coolant flow path 24 is constituted of surfaces of the plurality of diamond particles 26.

As indicated by arrows in Fig. 4, the coolant supplied from coolant supply path 13 provided in shank 10 is introduced through coolant flow path 24 opened in trailing end surface 22 of cutting edge portion 20 into the inside of cutting edge portion 20. Then, the coolant is discharged to the outside through coolant flow path 24 opened in leading end surface 21 of cutting edge portion 20. Coolant flow path 24 may be branched into a plurality of flow paths. Each of openings of the plurality of branched flow paths constitutes cutting edge 23. The coolant may be a liquid, or may be a gas. When the coolant is a liquid, the liquid may be water soluble, or may be oil soluble.

The material constituting cutting edge portion 20 is polycrystalline diamond, a cubic boron nitride sintered body, silicon carbide, or the like, for example. Desirably, the material constituting cutting edge portion 20 is a polycrystalline diamond sintered body. Specifically, the polycrystalline diamond has an average particle diameter of 0.1 µm or more and 100 µm or less, for example. The upper limit of the average particle diameter of the polycrystalline diamond may be, although not particularly limited to, 50 µm or less, or 10 µm or less, for example. The lower limit of the average particle diameter of the polycrystalline diamond may be, although not particularly limited to, 0.5 µm or more, or 1 µm or more, for example. The average particle diameter of the polycrystalline diamond can be measured by the following method.

### <Method for Measuring Particle Diameter of Polycrystalline Diamond>

To obtain the average particle diameter of diamond particles in the polycrystalline diamond, particle diameter distribution of crystal particles constituting a sintered body is measured using a scanning electron microscope with a magnification of 10 to 500,000 times, based on a photographic image. Specifically, image analysis software (for example, Scionlmage manufactured by Scion Corporation) is used to extract individual particles, binarize the extracted particles, and calculate the area (S) of each particle. Then, the particle diameter (D) of each particle is calculated as a diameter of a circle having the same area (D = 2√(S/π)). Subsequently, the particle diameter distribution obtained above is processed by data analysis software (for example, Origin manufactured by OriginLab, Mathchad manufactured by Parametric Technology, or the like), and thereby the average particle diameter can be calculated.

The porous body has a porosity of 2% by volume or more and 20% by volume or less, for example. The upper limit of the porosity of the porous body may be, although not particularly limited to, 10% by volume or less, or 8% by volume or less, for example. The lower limit of the porosity of the porous body may be, although not particularly limited to, 3% by volume or more, or 5% by volume or more, for example. The method for measuring the porosity of the porous body will be described later.

Next, the function and effect of end mill 1 in accordance with the first embodiment will be described.

According to end mill 1 in accordance with the first embodiment, shank 10 has coolant supply path 13. Cutting edge portion 20 covers outlet 12d of coolant supply path 13 and is provided on shank 10. Cutting edge portion 20 is made of a porous body. The coolant introduced from coolant supply path 13 appears on the surface of cutting edge portion 20 through the inside of cutting edge portion 20. Accordingly, chips clogging cutting edge portion 20 are pushed to the outside by the coolant. In addition, the coolant is discharged to the outside from the surface of cutting edge portion 20. Accordingly, cutting edge portion 20 can be effectively cooled. As a result, it is possible to suppress wear of cutting edge portion 20 while suppressing chips from clogging cutting edge portion 20.

In addition, according to end mill 1 in accordance with the first embodiment, cutting edge portion 20 includes trailing end surface 22 on a side of shank 10, leading end surface 21 opposite to trailing end surface 22, and coolant flow path 24 penetrating trailing end surface 22 and leading end surface 21. Each opening of coolant flow path 24 in leading end surface 21 constitutes cutting edge 23. Thereby, it is possible to effectively cool cutting edges 23 while suppressing chips from clogging cutting edges 23 formed in leading end surface 21.

Further, according to end mill 1 in accordance with the first embodiment, cutting edge portion 20 is made of polycrystalline diamond. When a workpiece is made of an iron-based material, cutting edges 23 may be significantly worn, because diamond and iron have high reactivity. Accordingly, the effect of suppressing wear is enhanced in particular in end mill 1 having cutting edge portion 20 made of diamond and used for a workpiece made of an iron-based material.

Further, according to end mill 1 in accordance with the first embodiment, the porous body has a porosity of 2% by volume or more and 20% by volume or less. By setting the porosity of the porous body to 2% by volume or more, a large amount of coolant can be discharged from the surface of cutting edge portion 20. On the other hand, by setting the porosity of the porous body to 20% by volume or less, an excessive reduction in the strength of cutting edge portion 20 can be suppressed.

### (Second Embodiment)

Next, a configuration of end mill 1 in accordance with a second embodiment will be described. End mill 1 in accordance with the second embodiment is different from end mill 1 in accordance with the first embodiment in the respect that leading end surface 21 has chip discharge groove 25 extending toward shank 10, and is the same as end mill 1 in accordance with the first embodiment in other respects. Hereinafter, the respect different from end mill 1 in accordance with the first embodiment will be mainly described.

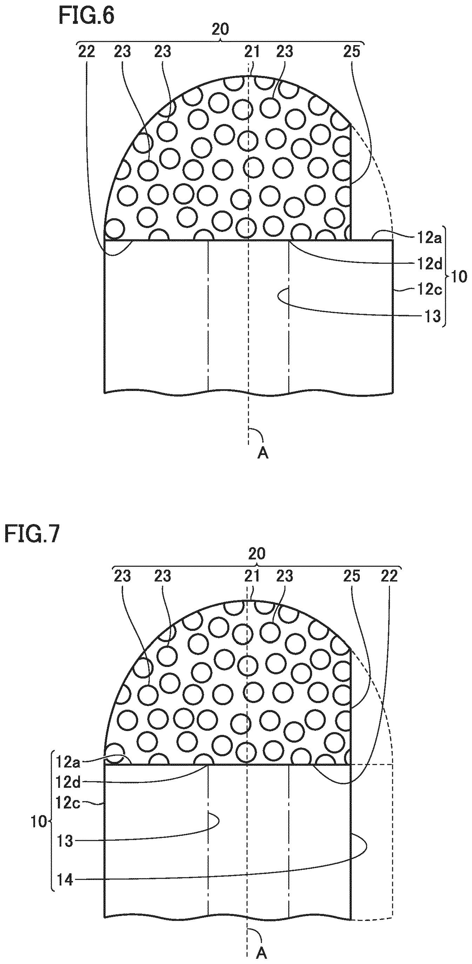

Fig. 5 is a schematic front view of end mill 1 in accordance with the second embodiment. Fig. 6 is a schematic side view of end mill 1 in accordance with the second embodiment. As shown in Fig. 5, when viewed from the direction parallel to rotation axis A, chip discharge groove 25 may have a linear shape. When viewed from the direction parallel to rotation axis A, cutting edge portion 20 has the shape of a circle lacking a portion thereof. A portion of third main surface 12a of shank 10 is exposed from cutting edge portion 20. As shown in Fig. 6, when viewed from a direction perpendicular to rotation axis A, chip discharge groove 25 extends toward shank 10. Chip discharge groove 25 may be continuous to trailing end surface 22 of cutting edge portion 20. Chip discharge groove 25 may be substantially parallel to a direction in which coolant supply path 13 provided in shank 10 extends. From another viewpoint, chip discharge groove 25 may be substantially parallel to rotation axis A.

According to end mill 1 in accordance with the second embodiment, leading end surface 21 has chip discharge groove 25 extending toward shank 10. Thereby, chips can be effectively discharged to the outside.

### (Third Embodiment)

Next, a configuration of end mill 1 in accordance with a third embodiment will be described. End mill 1 in accordance with the third embodiment is different from end mill 1 in accordance with the second embodiment in the respect that shank 10 has outer circumferential groove 14, and is the same as end mill 1 in accordance with the second embodiment in other respects. Hereinafter, the respect different from end mill 1 in accordance with the second embodiment will be mainly described.

Fig. 7 is a schematic side view of end mill 1 in accordance with the third embodiment. As shown in Fig. 7, shank 10 may have outer circumferential groove 14. When viewed from the direction perpendicular to rotation axis A, outer circumferential groove 14 may have a linear shape. Outer circumferential groove 14 may be substantially parallel to the direction in which coolant supply path 13 provided in shank 10 extends. From another viewpoint, outer circumferential groove 14 may be substantially parallel to rotation axis A. Outer circumferential groove 14 is provided along a direction in which chip discharge groove 25 provided in cutting edge portion 20 extends. From another viewpoint, outer circumferential groove 14 is continuous to chip discharge groove 25.

According to end mill 1 in accordance with the third embodiment, shank 10 has outer circumferential groove 14 extending along the direction in which chip discharge groove 25 extends. Thereby, chips can be further effectively discharged to the outside.

### (Fourth Embodiment)

Next, a configuration of end mill 1 in accordance with a fourth embodiment will be described. End mill 1 in accordance with the fourth embodiment is different from end mill 1 in accordance with the second embodiment in the respect that chip discharge groove 25 has an arc shape, and is the same as end mill 1 in accordance with the second embodiment in other respects. Hereinafter, the respect different from end mill 1 in accordance with the second embodiment will be mainly described.

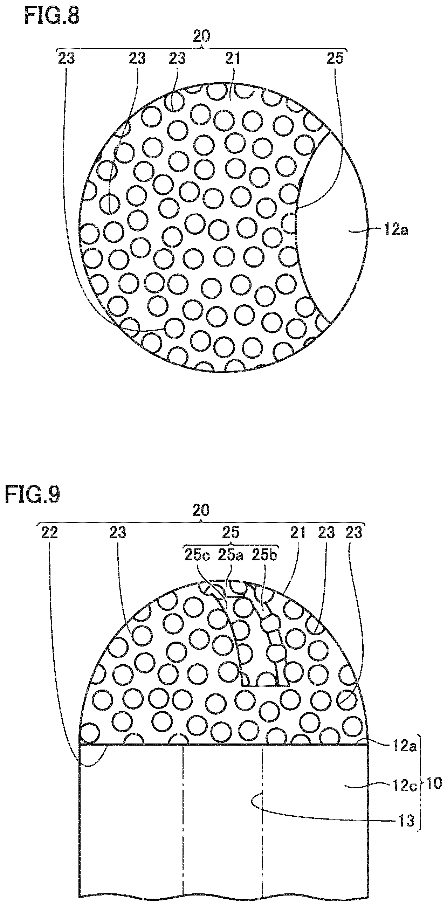

Fig. 8 is a schematic front view of end mill 1 in accordance with the fourth embodiment. As shown in Fig. 8, when viewed from the direction parallel to rotation axis A, chip discharge groove 25 may have an arc shape. When viewed from the direction parallel to rotation axis A, a portion of third main surface 12a of shank 10 is exposed from cutting edge portion 20. When viewed from the direction parallel to rotation axis A, chip discharge groove 25 may be recessed toward rotation axis A. When viewed from the direction parallel to rotation axis A, chip discharge groove 25 is located on a more outer circumferential side than the outlet of coolant supply path 13 provided in shank 10. End mill 1 in accordance with the fourth embodiment exhibits the same function and effect as those of end mill 1 in accordance with the second embodiment.

### (Fifth Embodiment)

Next, a configuration of end mill 1 in accordance with a fifth embodiment will be described. End mill 1 in accordance with the fifth embodiment is different from end mill 1 in accordance with the first embodiment in the respect that leading end surface 21 has chip discharge groove 25 and chip discharge groove 25 is separated from trailing end surface 22, and is the same as end mill 1 in accordance with the first embodiment in other respects. Hereinafter, the respect different from end mill 1 in accordance with the first embodiment will be mainly described.

Fig. 9 is a schematic side view of end mill 1 in accordance with the fifth embodiment. As shown in Fig. 9, chip discharge groove 25 may be provided along the shape of leading end surface 21. Specifically, chip discharge groove 25 is constituted of a first side surface portion 25a, a second side surface portion 25b, and a first bottom surface portion 25c, for example. Second side surface portion 25b is continuous to first side surface portion 25a. First bottom surface portion 25c is continuous to each of first side surface portion 25a and second side surface portion 25b. Each of first side surface portion 25a and second side surface portion 25b is continuous to leading end surface 21. First bottom surface portion 25c is located closer to shank 10 than leading end surface 21. Each of first side surface portion 25a and second side surface portion 25b extends in a direction in which it intersects leading end surface 21.

As shown in Fig. 9, chip discharge groove 25 is continuous to cutting edges 23. Specifically, the outlets of coolant flow path 24 may be exposed in first bottom surface portion 25c. The outlets of coolant flow path 24 may be exposed in first side surface portion 25a. The outlets of coolant flow path 24 may be exposed in second side surface portion 25b. Chip discharge groove 25 may be separated from trailing end surface 22 of cutting edge portion 20. Specifically, each of first side surface portion 25a, second side surface portion 25b, and first bottom surface portion 25c is separated from trailing end surface 22. From another viewpoint, chip discharge groove 25 does not have to reach shank 10. According to end mill 1 in accordance with the fifth embodiment, chips can be effectively discharged to the outside, when compared with an end mill without having chip discharge groove 25.

### (Sixth Embodiment)

Next, a configuration of end mill 1 in accordance with a sixth embodiment will be described. End mill 1 in accordance with the sixth embodiment is different from end mill 1 in accordance with the fifth embodiment in the respect that chip discharge groove 25 is continuous to trailing end surface 22, and is the same as end mill 1 in accordance with the fifth embodiment in other respects. Hereinafter, the respect different from end mill 1 in accordance with the fifth embodiment will be mainly described.

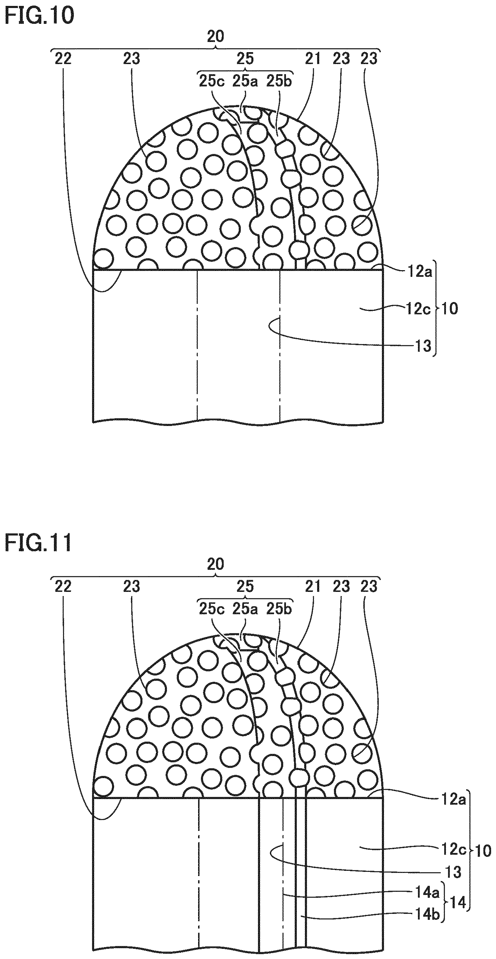

Fig. 10 is a schematic side view of end mill 1 in accordance with the sixth embodiment. As shown in Fig. 10, chip discharge groove 25 may be continuous to trailing end surface 22. From another viewpoint, chip discharge groove 25 may reach shank 10. Chip discharge groove 25 is constituted of first side surface portion 25a, second side surface portion 25b, and first bottom surface portion 25c, for example. Each of second side surface portion 25b and first bottom surface portion 25c is continuous to trailing end surface 22. First side surface portion 25a is separated from trailing end surface 22. A portion of third main surface 12a of shank 10 may be exposed from cutting edge portion 20 at the portion of chip discharge groove 25. According to end mill 1 in accordance with the fifth embodiment, chips can be effectively discharged to the outside.

### (Seventh Embodiment)

Next, a configuration of end mill 1 in accordance with a seventh embodiment will be described. End mill 1 in accordance with the seventh embodiment is different from end mill 1 in accordance with the sixth embodiment in the respect that shank 10 has outer circumferential groove 14, and is the same as end mill 1 in accordance with the sixth embodiment in other respects. Hereinafter, the respect different from end mill 1 in accordance with the sixth embodiment will be mainly described.

Fig. 11 is a schematic side view of end mill 1 in accordance with the seventh embodiment. As shown in Fig. 11, shank 10 may have outer circumferential groove 14. Outer circumferential groove 14 extends from third main surface 12a toward fourth main surface 12b (see Fig. 1) of shank 10. Outer circumferential groove 14 may be provided in parallel with rotation axis A, or may be spirally provided around rotation axis A. Outer circumferential groove 14 is constituted of a third side surface portion 14b and a second bottom surface portion 14a. Each of third side surface portion 14b and second bottom surface portion 14a is continuous to third main surface 12a of shank 10. Chip discharge groove 25 of cutting edge portion 20 is continuous to outer circumferential groove 14 of shank 10. From another viewpoint, outer circumferential groove 14 is provided along the direction in which chip discharge groove 25 extends. Specifically, third side surface portion 14b extends along a direction in which second side surface portion 25b extends. Similarly, second bottom surface portion 14a extends along a direction in which first bottom surface portion 25c extends.

According to end mill 1 in accordance with the seventh embodiment, shank 10 has outer circumferential groove 14 extending along the direction in which chip discharge groove 25 extends. Thereby, chips can be further effectively discharged to the outside.

### (Eighth Embodiment)

Next, a configuration of end mill 1 in accordance with an eighth embodiment will be described. End mill 1 in accordance with the eighth embodiment is different from end mill 1 in accordance with the first embodiment in the respect that coolant supply path 13 has a tapered portion 13b, and is the same as end mill 1 in accordance with the first embodiment in other respects. Hereinafter, the respect different from end mill 1 in accordance with the first embodiment will be mainly described.

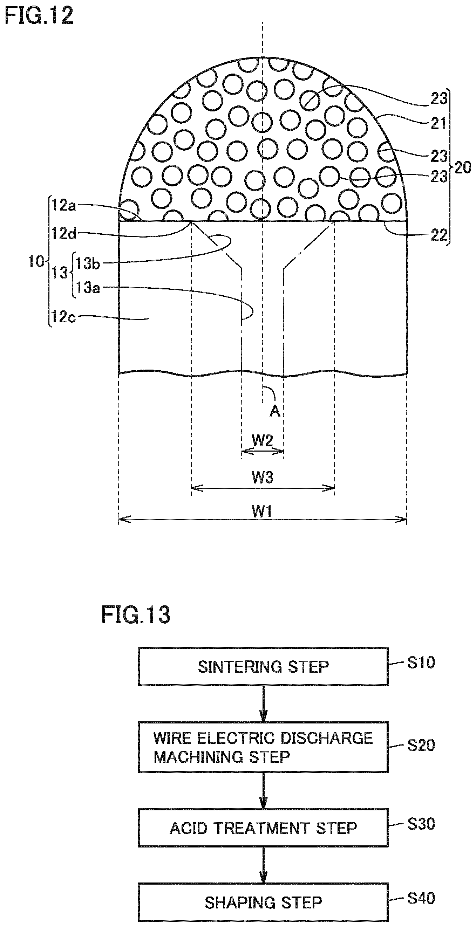

Fig. 12 is a schematic side view of end mill 1 in accordance with the eighth embodiment. As shown in Fig. 11, coolant supply path 13 may have tapered portion 13b and a cylindrical portion 13a. Tapered portion 13b is a portion which widens in a direction from second main surface 11b toward third main surface 12a. Tapered portion 13b extends along a straight line inclined relative to rotation axis A, for example. The width of tapered portion 13b in the direction perpendicular to rotation axis A increases in the direction from second main surface 11b toward third main surface 12a. Tapered portion 13b is continuous to third main surface 12a. Tapered portion 13b is located between cylindrical portion 13a and cutting edge portion 20. Cylindrical portion 13a extends along rotation axis A. From another viewpoint, cylindrical portion 13a surrounds rotation axis A. Tapered portion 13b is covered with trailing end surface 22 of cutting edge portion 20. Coolant flow path 24 of cutting edge portion 20 is continuous to tapered portion 13b.

According to end mill 1 in accordance with the eighth embodiment, coolant supply path 13 has tapered portion 13b. Thereby, the coolant is effectively supplied to cutting edge portion 20. As a result, it is possible to further suppress wear of cutting edge portion 20 while further suppressing chips from clogging cutting edge portion 20.

Next, a method for manufacturing the cutting edge portion will be described.

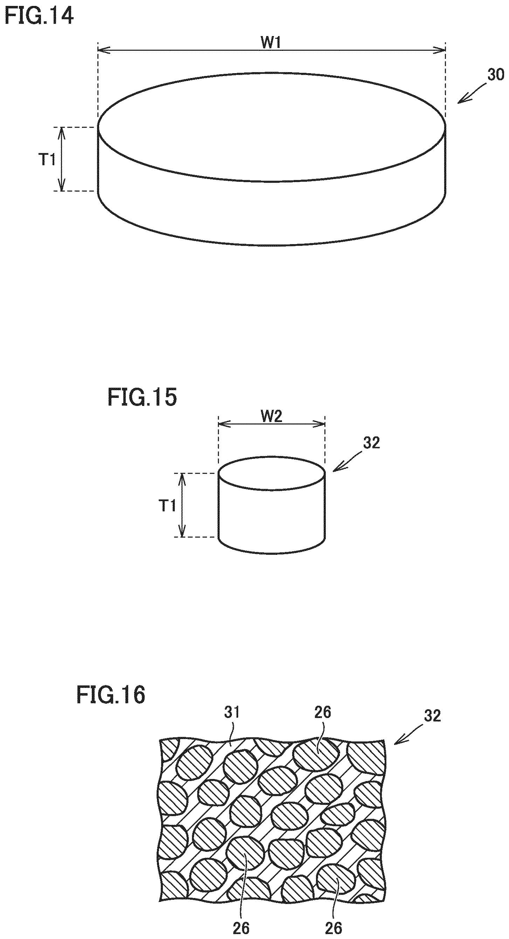

Fig. 13 is a flowchart schematically showing a method for manufacturing a cutting portion in accordance with the present embodiment. As shown in Fig. 13, the method for manufacturing the cutting edge portion mainly has a sintering step (S10), a wire electric discharge machining step (S20), an acid treatment step (S30), and a shaping step (S40). First, the sintering step (S10) is performed. In the sintering step (S10), diamond and cobalt powder are mixed. The mixed diamond and cobalt are held for several hours under a pressure of 50,000 atmospheres and at a temperature of 1300°C or more and 1500°C or less, for example, to obtain a sintered body. Fig. 14 is a schematic perspective view showing a configuration of the sintered body. As shown in Fig. 14, a sintered body 30 is disk-shaped, for example. Sintered body 30 has a diameter W1 of 50 mm, for example. Sintered body 30 has a thickness T1 of 2 mm or more and 20 mm or less, for example.

Then, the wire electric discharge machining step (S20) is performed. Specifically, a wire electric discharge machine (WEDM) is used to hollow a pellet out of the disk-shaped sintered body. Fig. 15 is a schematic perspective view showing a configuration of the pellet. As shown in Fig. 15, a pellet 32 is cylindrical, for example. Pellet 32 has a diameter W2 which is substantially the same as the diameter of cutting edge portion 20, for example. Pellet 32 has thickness T1 of 2 mm or more and 20 mm or less, for example. Fig. 16 is a schematic cross sectional view showing a configuration of the pellet before the acid treatment step. As shown in Fig. 16, pellet 32 is constituted of diamond particles 26 and a cobalt region 31 (binder). Cobalt region 31 is arranged to surround each diamond particle 26. Cobalt region 31 is arranged between two adjacent diamond particles 26.

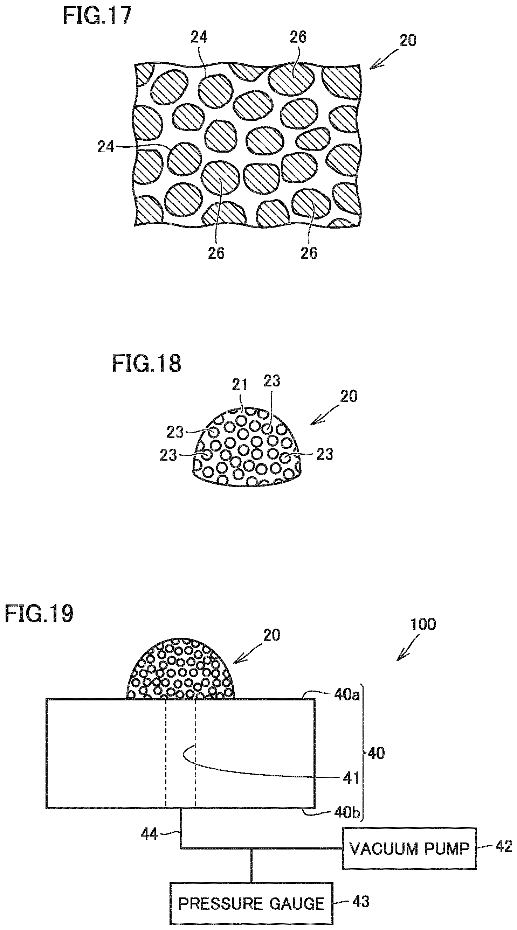

Then, the acid treatment step (S30) is performed. Specifically, pellet 32 is placed in a sealed pot (not shown). An acid is placed in the pot. The acid is hydrochloric acid, sulfuric acid, nitric acid, or the like, for example. Pellet 32 is held for 72 hours, for example, with being immersed in the acid described above. The pressure inside the pot is several atmospheres, for example. The acid has a temperature of 150°C or more and 200°C or less, for example. Thereby, the cobalt dissolves out of pellet 32 into the acid. In other words, the cobalt reaches out. Fig. 17 is a schematic cross sectional view showing a configuration of the pellet after the acid treatment step. As shown in Fig. 17, after the cobalt reaches out, a cavity is formed inside pellet 32. This cavity serves as coolant flow path 24 of cutting edge portion 20. The coolant flows through the cavity between diamond particles 26.

Then, the shaping step (S40) is performed. Specifically, pellet 32 is shaped after pellet 32 is taken out of the pot for acid treatment. Fig. 18 is a schematic perspective view showing a configuration of the pellet after being shaped. As shown in Fig. 18, pellet 32 is machined to have leading end surface 21 having a substantially hemispherical shape. A plurality of openings of coolant flow path 24 are exposed in leading end surface 21. The openings of coolant flow path 24 function as cutting edges 23.

Next, a method for measuring porosity will be described.

Fig. 19 is a schematic view showing a configuration of a measurement device for porosity. As shown in Fig. 19, a measurement device 100 for porosity mainly has a sample table 40, a vacuum pump 42, a pressure gauge 43, and a pipe 44. Sample table 40 has a front surface 40a and a back surface 40b. Sample table 40 is provided with a through hole 41 opened in each of front surface 40a and back surface 40b. Through hole 41 is connected to vacuum pump 42 via pipe 44. Pressure gauge 43 is provided at some midpoint in pipe 44. Pressure gauge 43 can measure the pressure inside pipe 44. Cutting edge portion 20 is placed on front surface 40a of sample table 40 to cover through hole 41 opened in front surface 40a of sample table 40.

When cutting edge portion 20 has a low porosity, the pressure inside pipe 44 becomes close to vacuum, and the pressure becomes low. On the other hand, when cutting edge portion 20 has a high porosity, the pressure inside pipe 44 does not fall too much, and the pressure does not become low. For example, reference samples having porosities of 0% and 100% are used, and pressures of the respective reference samples are set as reference values. Thereafter, using cutting edge portion 20 as a measurement target, the porosity thereof can be determined by measuring the pressure in pipe 44 with pressure gauge 43.

It should be noted that the workpiece to be suitably machined by end mill 1 in accordance with each embodiment described above is a mold made of a cemented carbide, or a hardened steel, for example. Examples of the type of the cemented carbide include AF1, G5, G6, and the like. Examples of the type of the hardened steel include SKD11.

It should be understood that the embodiments disclosed herein are illustrative and non-restrictive in every respect. The scope of the present invention is defined by the scope of the claims, rather than the description above, and is intended to include any modifications within the scope and meaning equivalent to the scope of the claims.

### REFERENCE SIGNS LIST

1: end mill; 10: shank; 11: first shank portion; 11a: first main surface; 11b: second main surface; 11c: first outer circumferential portion; 12: second shank portion; 12a: third main surface; 12b: fourth main surface; 12c: second outer circumferential portion; 12d: outlet; 13: coolant supply path; 13a: cylindrical portion; 13b: tapered portion; 14: outer circumferential groove; 14a: second bottom surface portion; 14b: third side surface portion; 20: cutting edge portion; 21: leading end surface; 22: trailing end surface; 23: cutting edge; 24: coolant flow path; 25: chip discharge groove; 25a: first side surface portion; 25b: second side surface portion; 25c: first bottom surface portion; 26: diamond particle; 30: sintered body; 31: cobalt region; 32: pellet; 40: sample table; 40a: front surface; 40b: back surface; 41: through hole; 42: vacuum pump; 43: pressure gauge; 44: pipe; 100: measurement device; A: rotation axis; T1: thickness; W1, W2: diameter.

## Claims

1. An end mill comprising:
a shank having a coolant supply path; and
a cutting edge portion covering an outlet of the coolant supply path and provided on the shank,
the cutting edge portion being made of a porous body.

2. The end mill according to claim 1, wherein
the cutting edge portion includes a trailing end surface on a side of the shank, a leading end surface opposite to the trailing end surface, and a coolant flow path penetrating the trailing end surface and the leading end surface, and
an opening of the coolant flow path in the leading end surface constitutes a cutting edge.

3. The end mill according to claim 2, wherein the leading end surface has a chip discharge groove extending toward the shank.

4. The end mill according to claim 3, wherein the chip discharge groove is separated from the trailing end surface.

5. The end mill according to claim 3, wherein the chip discharge groove is continuous to the trailing end surface.

6. The end mill according to claim 3, wherein the shank has an outer circumferential groove extending along a direction in which the chip discharge groove extends.

7. The end mill according to any one of claims 3 to 6, wherein, when viewed from a direction parallel to a rotation axis, the chip discharge groove has a linear shape.

8. The end mill according to any one of claims 3 to 6, wherein, when viewed from a direction parallel to a rotation axis, the chip discharge groove has an arc shape.

9. The end mill according to any one of claims 1 to 8, wherein the cutting edge portion is made of polycrystalline diamond.

10. The end mill according to claim 9, wherein the polycrystalline diamond has an average particle diameter of 0.5 µm or more and 100 µm or less.

11. The end mill according to any one of claims 1 to 10, wherein the porous body has a porosity of 2% by volume or more and 20% by volume or less.

## Amended claims

### Amended claims under Art. 19.1 PCT

1. (Amended) An end mill comprising:
a shank having a coolant supply path; and
a cutting edge portion covering an outlet of the coolant supply path and provided on the shank,
the cutting edge portion being made of a porous body,
the cutting edge portion including a trailing end surface on a side of the shank, a leading end surface opposite to the trailing end surface, and a coolant flow path penetrating the trailing end surface and the leading end surface,
an opening of the coolant flow path in the leading end surface constituting a cutting edge.

2. (Canceled)

3. (Amended) The end mill according to claim 1, wherein the leading end surface has a chip discharge groove extending toward the shank.

4. The end mill according to claim 3, wherein the chip discharge groove is separated from the trailing end surface.

5. The end mill according to claim 3, wherein the chip discharge groove is continuous to the trailing end surface.

6. The end mill according to claim 3, wherein the shank has an outer circumferential groove extending along a direction in which the chip discharge groove extends.

7. The end mill according to any one of claims 3 to 6, wherein, when viewed from a direction parallel to a rotation axis, the chip discharge groove has a linear shape.

8. The end mill according to any one of claims 3 to 6, wherein, when viewed from a direction parallel to a rotation axis, the chip discharge groove has an arc shape.

9. (Amended) The end mill according to any one of claims 1 and 3 to 8, wherein the cutting edge portion is made of polycrystalline diamond.

10. The end mill according to claim 9, wherein the polycrystalline diamond has an average particle diameter of 0.5 µm or more and 100 µm or less.

11. (Amended) The end mill according to any one of claims 1 and 3 to 10, wherein the porous body has a porosity of 2% by volume or more and 20% by volume or less.
